# EUROPÄISCHE PATENTSCHRIFT

(11) **EP 3 811 044 B1**
(45) Veröffentlichungstag und Bekanntmachung des Hinweises auf die Patenterteilung: **22.03.2023**
(21) Anmeldenummer: 19745999.3
(22) Anmeldetag: 09.07.2019
(51) Int. Cl.: G01K 5/52, H02B 13/065, H01H 11/00

(54) **SCHALTANLAGENTEMPERATURMESSUNG**
SWITCHING SYSTEM TEMPERATURE MEASUREMENT
MESURE DE TEMPÉRATURE D'INSTALLATION DE COMMUTATION

(30) Priorität: 13.08.2018 DE 102018213625
(43) Veröffentlichungstag der Anmeldung: 28.04.2021
(73) Patentinhaber: Siemens Aktiengesellschaft, 80333 München (DE)
(72) Erfinder: HINTZE, Thomas, 14612 Falkensee (DE)
(74) Vertreter: Siemens Patent Attorneys
(86) Internationale Anmeldenummer: PCT/EP2019/068410
(87) Internationale Veröffentlichungsnummer: WO 2020/035222

(56) Entgegenhaltungen:
- CH-A- 135 507
- DE-A1- 2 718 403
- DE-A1- 19 632 732
- DE-C- 286 002
- US-A- 112 106
- US-A1- 2008 087 115

## Beschreibung

Die Erfindung bezieht sich auf eine Schaltanlage für Mittelspannungen und/oder Hochspannungen mit einer Temperaturmessung und ein Verfahren zum Betreiben einer Schaltanlage mit einer Temperaturmessung.

Im Stand der Technik sind Temperaturmessungen in Schaltanlagen Schaltanlage für Mittelspannungen und/oder Hochspannungen an Stromanschlüssen bekannt, die auf einer berührungslosen Infrarottemperaturmessung oder berührenden Messung mit Funksensoren beruhen. Eine Messung mit über Kabel angebundene Temperaturmessung mittels kabelgebundener Temperatursensoren ist an Stromführenden Bauteilen nicht möglich, da an Stromanschlüssen Spannungen über 1000 V anliegen und so die geforderten Isolationswiderstände nicht eingehalten werden können. Die einfache Nutzung von berührungslosen Infrarotthermometern scheidet in der Regel aus, da die zu untersuchenden Stromanschlüsse, nicht so verbaut sind, dass diese optisch jederzeit für eine Infrarottemperaturmessung zugänglich sind. Funksensoren sind nur schwerlich platzierbar und auch nur sehr aufwändig austauschbar, so dass eine Temperaturmessung an Stromanschlüssen einer installierten Anlage nicht stattfindet.

So offenbart die US 2008/087115 A1 eine Schaltanlage mit einer Temperaturbestimmung, die eine Übertragung einer gemessenen Temperatur kabellos mittels einer Funkverbindung überträgt.

Die DE 196 32 732 A1 beschreibt eine Temperaturbestimmung über einen Temperatursensor, der mittels eines wärmeleitenden Stabes Temperaturen misst, die von dem Temperatursensor entfernt angeordnet sind.

Aufgabe der Erfindung ist es daher die Nachteile aus dem Stand der Technik zu beheben und eine kostengünstige, zuverlässige und einfach zu installierende Temperaturmessung bereitzustellen.

Die Aufgabe wird durch den unabhängigen Anspruch 1 und die von diesem abhängigen Ansprüche gelöst.

Ein Ausführungsbeispiel bezieht sich auf eine Schaltanlage mit einem Schalter für Mittelspannungen und/oder Hochspannungen, wobei der Schalter über eine erste elektrische Verbindung an einer ersten Seite des Schalters und eine zweite elektrische Verbindung an einer zweiten Seite des Schalters verfügt, wobei über die erste elektrische Verbindung eine Mittelspannung oder Hochspannung dem Schalter zugeführt wird und über die zweite elektrische Verbindung eine Mittelspannung oder Hochspannung von dem Schalter weggeführt wird, oder umgekehrt, und einer Temperaturmesseinheit, wobei die Temperaturmesseinheit einen Temperaturmesskopf, ein Temperaturübertragungselement, ein Temperaturübertragungsmedium, ein Temperaturwandlungselement und einen Temperatursignalisierer aufweist, wobei:
- an der ersten elektrischen Verbindung oder an der zweiten elektrischen Verbindung der Temperaturmesskopf angeordnet ist,
- sich an den Temperaturmesskopf das Temperaturübertragungselement anschließt, wobei der Temperaturmesskopf derart wärmeleitend ausgestaltet ist, dass er eine erste Temperatur der ersten elektrischen Verbindung oder der zweiten elektrischen Verbindung annimmt oder sich dieser ersten Temperatur annähert und der Temperaturmesskopf ausgestaltet ist die erste Temperatur derart auf das in dem Temperaturübertragungselement angeordnete Temperaturübertragungsmedium zu übertragen, dass es ein für die erste Temperatur charakteristisches Volumen, und damit eine charakteristische Länge, annimmt, wobei das Temperaturübertragungselement und das Temperaturübertragungsmedium elektrisch isolierend ausgeführt sind und das Temperaturübertragungselement und das Temperaturübertragungsmedium unterschiedliche Wärmeausdehnungskoeffizienten aufweisen,
- das charakteristische Volumen des Temperaturübertragungsmediums auf das Temperaturwandlungselement derart wirkt, dass das Temperaturwandlungselement ein Temperatursignal erzeugt, dass von dem Temperatursignalisierer angezeigt, signalisiert und/oder gespeichert wird.

Bevorzugt wird, dass das Temperaturübertragungselement einen im Vergleich zum Wärmeausdehnungskoeffizienten des Temperaturübertragungsmedium vernachlässigbar kleinen Wärmeausdehnungskoeffizienten aufweist.

Auch wird bevorzugt, dass das Temperaturwandlungselement eine Druckdose und/oder einen Piezoschalter und/oder einen Drucksensor und/oder Wegaufnehmer beinhalten.

Weiter wird bevorzugt, dass der Temperatursignalisierer eine analoge Temperaturanzeige und/oder eine digitale Temperaturanzeige aufweist.

Bevorzugt wird auch, dass der Temperatursignalisierer eine digitale Temperaturanzeige aufweist und dass der Temperatursignalisierer das Temperatursignal verarbeitet oder unverarbeitet an eine Speichereinheit und/oder eine Kommunikationseinheit weiterleitet.

Auch wird bevorzugt, dass die Kommunikationseinheit ausgestaltet ist das verarbeitete oder unverarbeitete Temperatursignal an eine oder mehrere zentrale oder verteilte Rechner weiterzuleiten. Insbesondere wird bevorzugt, dass das verarbeitete oder unverarbeitete Temperatursignal in einer Cloud-Anwendung gespeichert und weiter verarbeitet wird. Weiter wird insbesondere bevorzugt, dass die Cloud-Anwendung basierend auf dem verarbeiteten oder unverarbeiteten Temperatursignal einer oder mehrerer Schaltanlagen, insbesondere mehrerer nicht miteinander kommunizierender Schaltanlagen, einen Zustand der Schaltanlage, insbesondere einen Wartungszustand oder Belastungszustand, bestimmt und bei Überschreitung von einem oder mehr Schwellwerten ein Warnsignal oder ein Steuersignal gesendet wird, insbesondere ein Warnsignal an eine Leitstelle und/oder ein Steuersignal an eine Leitstelle und/oder an die betreffende Schaltanlage mit der Schwellwertüberschreitung.

Weiter wird bevorzugt, dass der Schalter in der Schaltanlage in Form eines Vakuumschalters ausgebildet ist.

Bevorzugt wird auch, dass der Schalter in Form eines hermetisch abgeschlossenen gasisolierten Schalters in einer gasisolierten Schaltanlage ausgebildet ist, sich der Temperaturmesskopf in einem mit einem Isoliergas befüllten Gasbehälter befindet und das Temperaturübertragungselement mit dem Temperaturübertragungsmedium durch ein Durchführung aus dem Gasbehälter herausgeführt wird, wobei das Temperaturübertragungselement mit dem Temperaturübertragungsmedium gasdicht in der Durchführung angeordnet ist.

Auch wird bevorzugt, dass das Temperaturübertragungselement mit dem Temperaturübertragungsmedium derart in der Durchführung angeordnet ist, dass eine Übertragung von mechanischen Spannungen von der Durchführung auf das Temperaturübertragungselement mit dem Temperaturübertragungsmedium minimiert sind.

Weiter wird bevorzugt, dass Temperaturübertragungselement mit dem Temperaturübertragungsmedium eine Metalllippe, bevorzugt eine gebogene oder gewellte Metalllippe aufweist, die eine Übertragung von mechanischen Spannungen von der Durchführung auf das Temperaturübertragungselement mit dem Temperaturübertragungsmedium minimiert.

Bevorzugt wird auch, dass der eine oder die mehreren zentralen oder verteilten Rechner das verarbeitete oder unverarbeitete Temperatursignal auf ein Temperaturkriterium hin analysieren und bei Überschreiten eines festen oder variablen Schwellwertes für das Temperaturkriterium ein Warnsignal an eine Leitwarte abgeben und/oder bei Überschreiten eines weiteren festen oder variablen Schwellwertes für das Temperaturkriterium ein Abschalten der Schaltanlage initiieren. Insbesondere wird bevorzugt, dass das verarbeitete oder unverarbeitete Temperatursignal in einer Cloud-Anwendung gespeichert und weiter verarbeitet wird. Weiter wird insbesondere bevorzugt, dass die Cloud-Anwendung basierend auf den verarbeiteten oder unverarbeiteten Temperatursignal einer oder mehrerer Schaltanlagen, insbesondere mehrerer nicht miteinander kommunizierender Schaltanlagen, eine Zustand der Schaltanlage, insbesondere einen Wartungszustand oder Belastungszustand, bestimmt und bei Überschreitung von einem oder mehr Schwellwerten ein Warnsignal oder ein Steuersignal gesendet wird, insbesondere ein Warnsignal an eine Leitstelle und/oder ein Steuersignal an eine Leitstelle und/oder die betreffende Schaltanlage mit der Schwellwertüberschreitung.

Die Erfindung wird im Folgenden beispielhaft anhand von Figuren erläutert.
- Figur 1:: Schematische Darstellung einer Frontansicht einer erfindungsgemäßen Schaltanlage;
- Figur 2:: Schematische Darstellung einer Seitenansicht einer erfindungsgemäßen Schaltanlage mit partiellem Aufriss im Bereich eines Vakuumschalters;
- Figur 3:: Schematische Darstellung einer Temperaturmesseinheit für eine erfindungsgemäße Schaltanlage;
- Figur 4:: Schematische Darstellung eines einfahrbaren Schalters mit einer Temperaturmesseinheit für eine erfindungsgemäße Schaltanlage.

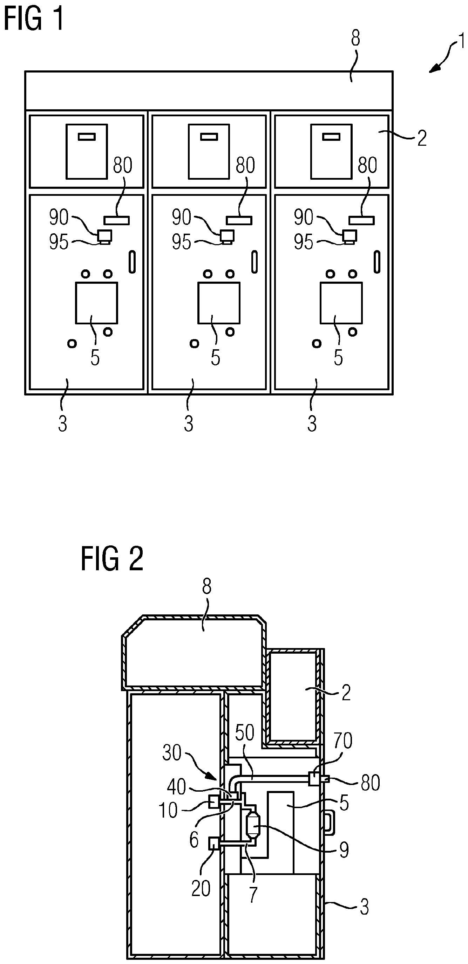

Die Figur 1 zeigt eine schematische Darstellung einer Frontansicht einer erfindungsgemäßen Schaltanlage 1. Die erfindungsgemäße Schaltanlage 1 besteht hier beispielhaft aus drei Leistungsschalteinheiten, die über einen gemeinsamen Druckentlastungskanal 8 verfügen. Jede der drei Leistungsschalteinheiten verfügt über eine Tür 3 vor einem Abteil mit einem Vakuumschalter 5 für Mittelspannungen und/oder Hochspannungen. Alternativ, aber hier nicht gezeigt, kann es sich anstelle der Vakuumschalter auch um einen gasisolierten Schalter handeln. Oberhalb des Abteils für den Vakuumschalter 5 ist ein Niederspannungsabteil 2 angeordnet. In der Tür 3 ist hier beispielhaft eine Ausnehmung vorgesehen, durch die auf Bedienelemente des Vakuumschalters 5 zugegriffen werden kann. In oder an der Tür 3 ist auch ein Temperatursignalisierer 80, insbesondere kann dieser am Vakuumschalter 5 befestigt sein und durch eine zweite Ausnehmung oder ein Fenster durch die Tür sichtbar gemacht sein. Ebenfalls an, hinter oder in der Tür 3 kann optional eine Speichereinheit 90 und/oder eine Kommunikationseinheit 95 angeordnet sein. Alternativ können eine Speichereinheit 90 und/oder eine Kommunikationseinheit 95 auch an anderen Orten der Schaltanlage angeordnet sein und Draht gebunden und/oder drahtlos mit einer hier nur andeutungsweise und nicht bezeichnet dargestellten Temperaturmesseinheit 30 verbunden sein.

Die Figur 2 zeigt eine schematische Darstellung einer Seitenansicht einer erfindungsgemäßen Schaltanlage 1 mit partiellem Aufriss im Bereich eines Vakuumschalters 5 mit Vakuumschaltröhre 9. Bevorzugt wird dabei, dass die Schaltanlage 1 einpolig oder dreipolig ausgeführt ist und jeweils eine oder mehr Vakuumschaltröhren 9 einem Pol zugeordnet sind. Wie in der Figur 1 gezeigt, ist auch in der Figur 2 der gemeinsame Druckentlastungskanal 8, das Niederspannungsabteil 2 und die Tür 3 dargestellt.

Im Bereich des Vakuumschalters 5 wurde ein Teil der Seitenverkleidung entfernt, um einen Blick auf den Vakuumschalters 5 mit der Temperaturmesseinheit 30 zu ermöglichen.

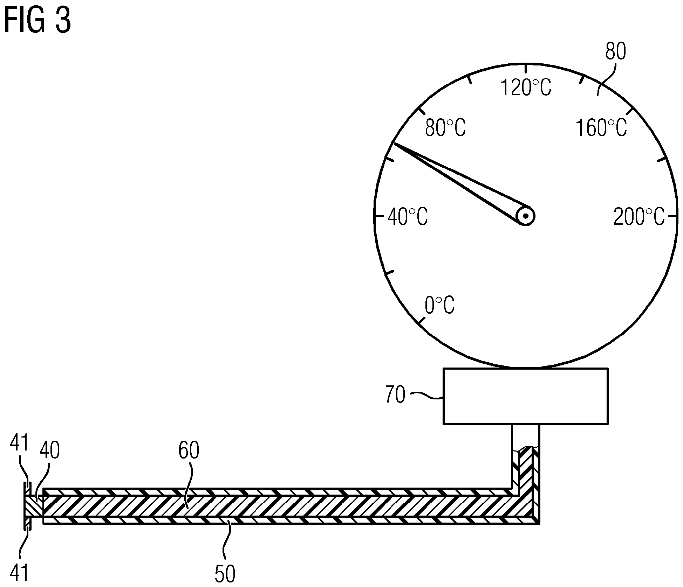

Die Temperaturmesseinheit 30 verfügt über einen Temperaturmesskopf 40, ein Temperaturübertragungselement 50, mit einem in Figur 3 gezeigten Temperaturübertragungsmedium 60, einem Temperaturwandlungselement 70 und einem, hier durch die Tür 3 geführten, Temperatursignalisierer 80. Der Temperaturmesskopf 40 ist in diesem Bespiel an einer ersten elektrischen Verbindung 10 auf einer ersten Seite 6 des Vakuumschalters 5 angeordnet. Alternativ kann der Temperaturmesskopf 40 auch an einer zweiten Seite 7 an einer zweiten elektrischen Verbindung 20 angeordnet sein. Der Temperaturmesskopf 40 ist über das Temperaturübertragungselement 50 mit dem Temperaturwandlungselement 70 verbunden. Das Temperaturwandlungselement 70 ist wiederum an den Temperatursignalisierer 80 angeschlossen. Der Vakuumschalter 5 ist in dem gezeigten Beispiel auf einer ausfahrbaren Plattform in der Schaltanlage 1 angeordnet und weist Kontakttulpen auf. Alternativ kann der Vakuumschalter 5 auch fest in der Schaltanlage 1 montiert sein.

Figur 3 zeigt eine schematische Darstellung einer Temperaturmesseinheit 30 für eine erfindungsgemäße Schaltanlage 1, beispielsweise aus den Figuren 1 und 2. Die Temperaturmesseinheit 30 weist einen Temperaturmesskopf 40, der hier optional mit zwei Temperaturmesskopfbefestigungsmitteln 41 an dem Messort befestigt werden kann. Die Temperaturmesskopfbefestigungsmitteln 41 können beispielsweise Öffnungen für Schrauben, Schrauben, Manschetten oder Klemmführungen sein. Der Temperaturmesskopf 40 ist so gestaltet, dass er ein Temperatur an einem Messort annehmen und an ein Temperaturübertragungsmedium 60 weiterleiten kann, wobei sich das Temperaturübertragungsmedium 60 in einem Temperaturübertragungselement 50 angeordnet ist. Bevorzugt weisen das Temperaturübertragungsmedium 60 und das Temperaturübertragungselement 50 unterschiedliche Wärmeausdehnungskoeffizienten auf, so dass ein Erwärmen oder Abkühlen des Temperaturübertragungsmediums 60 und des Temperaturübertragungselements 50 zu einer unterschiedlichen Volumenausdehnung, und damit zu einer unterschiedlichen Längenausdehnung, von dem Temperaturübertragungsmedium 60 und dem Temperaturübertragungselement 50 kommt. Durch die unterschiedliche Volumenausdehnung, und damit unterschiedliche Längenausdehnung, von Temperaturübertragungsmedium 60 und Temperaturübertragungselement 50 verändert sich der Druck auf das Temperaturwandlungselement 70, das die registrierte Druckänderung entweder mechanisch, hydraulisch, magnetisch oder elektrisch an den, hier analog dargestellten, Temperatursignalisierer 80 weitergibt. Um die Anforderungen zur Sicherheit von Schaltanlagen gewährleisten zu können, ist das Temperaturübertragungsmedium 60 und das Temperaturübertragungselement 50 elektrisch nicht leitend ausgeführt.

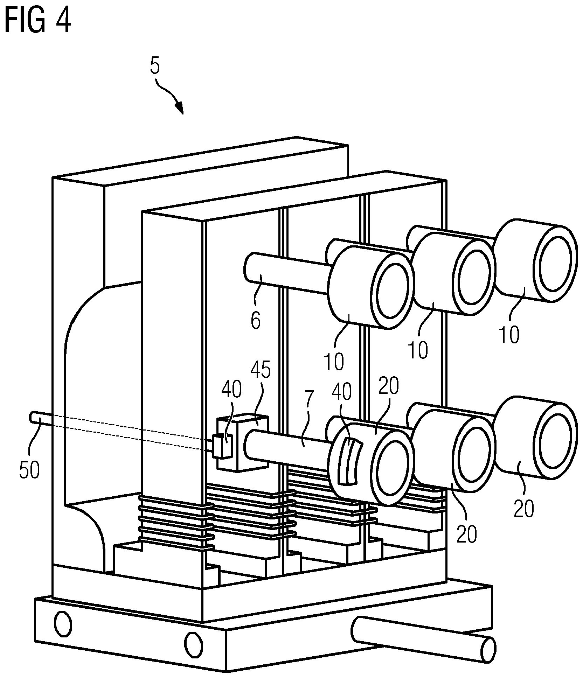

Die Figur 4 zeigt eine schematische Darstellung eines einfahrbaren, dreipoligen Vakuumschalters 5 mit einer Temperaturmesseinheit 30 für eine erfindungsgemäße Schaltanlage 1. Der Temperaturmesskopf 40 ist in diesem Bespiel an einer zweiten elektrischen Verbindung 20 auf einer zweiten Seite 7 des Vakuumschalters 5 angeordnet und nur beispielhaft an einem Pol des Vakuumschalters 5 dargestellt. Der gestrichelt umrahmte Bereich erlaubt einen Einblick durch die Verschalung auf das Wärmeabführungsmittel 45 mit Temperaturmesskopf 40 und dem Temperaturübertragungselement 50.

Alternativ kann der Temperaturmesskopf 40 auch an einer ersten Seite 6 an einer ersten elektrischen Verbindung 10 angeordnet sein. Als weitere Alternative ist auch ein Temperaturmesskopf 40 an einer Einfahrtulpe gezeigt, dieses Mal ohne ein Temperaturübertragungselement 50.

### Bezugszeichenliste

- 1: Schaltanlage;
- 2: Niederspannungsabteil;
- 3: Tür vor einem Vakuumschalter für Mittelspannungen und/oder Hochspannungen;
- 5: Schalter für Mittelspannungen und/oder Hochspannungen;
- 6: erste Seite des Schalters (5);
- 7: zweite Seite des Schalters (5);
- 8: Druckentlastungskanal;
- 9: Vakuumschaltröhre;
- 10: erste elektrische Verbindung;
- 20: zweite elektrische Verbindung;
- 30: Temperaturmesseinheit;
- 40: Temperaturmesskopf;
- 41: Temperaturmesskopfbefestigungsmitteln;
- 45: Wärmeabführungsmittel;
- 50: Temperaturübertragungselement;
- 60: Temperaturübertragungsmedium;
- 70: Temperaturwandlungselement;
- 80: Temperatursignalisierer;
- 90: Speichereinheit;
- 95: Kommunikationseinheit.

## Patentansprüche

1. Schaltanlage (1) mit einem Schalter (5) für Mittelspannungen und/oder Hochspannungen, wobei der Schalter (5) über eine erste elektrische Verbindung (10) an einer ersten Seite (6) des Schalters (5) und eine zweite elektrische Verbindung (20) an einer zweiten Seite (7) des Schalters (5) verfügt, wobei über die erste elektrische Verbindung (10) eine Mittelspannung oder Hochspannung dem Schalter (5) zuführbar ist und über die zweite elektrische Verbindung (20) eine Mittelspannung oder Hochspannung von dem Schalter (5) wegführbar ist, und einer Temperaturmesseinheit (30), wobei die Temperaturmesseinheit (30) einen Temperaturmesskopf (40), ein Temperaturübertragungselement (50), ein Temperaturübertragungsmedium (60), ein Temperaturwandlungselement (70) und einen Temperatursignalisierer (80) aufweist, wobei
• an der ersten elektrischen Verbindung (10) oder an der zweiten elektrischen Verbindung (20) der Temperaturmesskopf (40) angeordnet ist, **dadurch gekennzeichnet, dass**
• sich an den Temperaturmesskopf (40) das Temperaturübertragungselement (50) anschließt, wobei der Temperaturmesskopf (40) derart wärmeleitend ausgestaltet ist, dass er eine erste Temperatur der ersten elektrischen Verbindung (10) oder der zweiten elektrischen Verbindung (20) annimmt oder sich dieser ersten Temperatur annähert und der Temperaturmesskopf (40) ausgestaltet ist die erste Temperatur derart auf das in dem Temperaturübertragungselement (50) angeordnete Temperaturübertragungsmedium (60) zu übertragen, dass es ein für die erste Temperatur charakteristisches Volumen annimmt, wobei das Temperaturübertragungselement (50) und das Temperaturübertragungsmedium (60) elektrisch isolierend ausgeführt sind und das Temperaturübertragungselement (50) und das Temperaturübertragungsmedium (60) unterschiedliche Wärmeausdehnungskoeffizienten aufweisen,
• das charakteristische Volumen des Temperaturübertragungsmediums (60) auf das Temperaturwandlungselement (70) derart wirkt, dass das Temperaturwandlungselement (70) ein Temperatursignal erzeugt, dass von dem Temperatursignalisierer (80) angezeigt, signalisiert und/oder gespeichert wird.

2. Schaltanlage (1) nach Anspruch 1,
**dadurch gekennzeichnet, dass** das Temperaturübertragungselement (50) einen im Vergleich zum Wärmeausdehnungskoeffizienten des Temperaturübertragungsmedium (60) vernachlässigbar kleinen Wärmeausdehnungskoeffizienten aufweist.

3. Schaltanlage (1) nach Anspruch 1 oder 2,
**dadurch gekennzeichnet, dass** das Temperaturwandlungselement (70) eine Druckdose und/oder einen Piezoschalter und/oder einen Drucksensor beinhalten.

4. Schaltanlage (1) nach einem der Ansprüch 1 bis 3,
**dadurch gekennzeichnet, dass** der Temperatursignalisierer (80) eine analoge Temperaturanzeige und/oder eine digitale Temperaturanzeige aufweist.

5. Schaltanlage (1) nach Anspruch 4,
**dadurch gekennzeichnet, dass** der Temperatursignalisierer (80) eine digitale Temperaturanzeige aufweist und dass der Temperatursignalisierer (80) das Temperatursignal verarbeitet oder unverarbeitet an eine Speichereinheit (90) und/oder eine Kommunikationseinheit (95) weiterleitet.

6. Schaltanlage (1) nach Anspruch 5,
**dadurch gekennzeichnet, dass** die Kommunikationseinheit (95) ausgestaltet ist, das verarbeitete oder unverarbeitete Temperatursignal an eine oder mehrere zentrale oder verteilte Rechner weiterzuleiten.

7. Schaltanlage (1) nach einem der vorstehenden Ansprüche, **dadurch gekennzeichnet, dass** der Schalter (5) in Form eines Vakuumschalters ausgebildet ist.

8. Schaltanlage (1) nach einem der vorstehenden Ansprüche, **dadurch gekennzeichnet, dass** der Schalter (5) in Form eines hermetisch abgeschlossenen gasisolierten Schalters (5) mit einem mit einem Isoliergas befüllten Gasbehälter ausgebildet ist, sich der Temperaturmesskopf (40) in dem mit einem Isoliergas befüllten Gasbehälter befindet und das Temperaturübertragungselement (50) mit dem Temperaturübertragungsmedium (60) durch eine Durchführung aus dem Gasbehälter herausgeführt wird, wobei das Temperaturübertragungselement (50) mit dem Temperaturübertragungsmedium (60) gasdicht in der Durchführung angeordnet ist.

9. Schaltanlage (1) nach Anspruch 8,
**dadurch gekennzeichnet, dass** das Temperaturübertragungselement (50) mit dem Temperaturübertragungsmedium (60) derart in der Durchführung angeordnet ist, dass eine Übertragung von mechanischen Spannungen von der Durchführung auf das Temperaturübertragungselement (50) mit dem Temperaturübertragungsmedium (60) minimiert ist.

10. Schaltanlage (1) nach Anspruch 9,
**dadurch gekennzeichnet, dass** die Durchführung zum Anschluss an das Temperaturübertragungselement (50) mit dem Temperaturübertragungsmedium (60) eine Metalllippe, bevorzugt eine gebogene oder gewellte Metalllippe aufweist, die eine Übertragung von mechanischen Spannungen von der Durchführung auf das Temperaturübertragungselement (50) mit dem Temperaturübertragungsmedium (60) minimiert.

11. Verfahren zum Betreiben einer Schaltanlage nach Anspruch 6,
**dadurch gekennzeichnet, dass** der eine oder die mehreren zentralen oder verteilten Rechner das verarbeitete oder unverarbeitete Temperatursignal auf ein Temperaturkriterium hin analysieren und bei Überschreiten eines festen oder variablen Schwellwertes für das Temperaturkriterium ein Warnsignal an eine Leitwarte abgeben und/oder bei Überschreiten eines weiteren festen oder variablen Schwellwertes für das Temperaturkriterium ein Abschalten der Schaltanlage initiieren.

## Claims

1. Switching station (1) with a switch (5) for medium voltages and/or high voltages, the switch (5) being equipped with a first electrical connection (10) on a first side (6) of the switch (5) and with a second electrical connection (20) on a second side (7) of the switch (5), a medium voltage or high voltage being able to be supplied to the switch (5) via the first electrical connection (10), and a medium voltage or high voltage being able to be conducted away from the switch (5) via the second electrical connection (20), and with a temperature-measuring unit (30), the temperature-measuring unit (30) comprising a temperature-measuring head (40), a temperature-transmitting element (50), a temperature-transmitting medium (60), a temperature-transducing element (70) and a temperature-signalling device (80),
with
• the temperature-measuring head (40) being arranged on the first electrical connection (10) or on the second electrical connection (20),
**characterized in that**
• the temperature-transmitting element (50) adjoins the temperature-measuring head (40), the temperature-measuring head (40) being configured to be heat-conducting in such a manner that it assumes a first temperature of the first electrical connection (10) or of the second electrical connection (20) or approaches this first temperature, and the temperature-measuring head (40) being configured to transmit the first temperature to the temperature-transmitting medium (60) arranged in the temperature-transmitting element (50) in such a manner that said temperature-transmitting medium assumes a volume that is characteristic of the first temperature, the temperature-transmitting element (50) and the temperature-transmitting medium (60) being designed to be electrically insulating, and the temperature-transmitting element (50) and the temperature-transmitting medium (60) having different coefficients of thermal expansion,
• the characteristic volume of the temperature-transmitting medium (60) acts on the temperature-transducing element (70) in such a manner that the temperature-transducing element (70) generates a temperature signal which is indicated, signalled and/or stored by the temperature-signalling device (80).

2. Switching station (1) according to Claim 1,
**characterized in that**
the temperature-transmitting element (50) has a negligibly small coefficient of thermal expansion in comparison with the coefficient of thermal expansion of the temperature-transmitting medium (60).

3. Switching station (1) according to Claim 1 or 2,
**characterized in that**
the temperature-transducing element (70) contains a barometric cell and/or a piezoelectric switch and/or a pressure sensor.

4. Switching station (1) according to any one of Claims 1 to 3,
**characterized in that**
the temperature-signalling device (80) comprises an analogue temperature display and/or a digital temperature display.

5. Switching station (1) according to Claim 4,
**characterized in that**
the temperature-signalling device (80) comprises a digital temperature display and **in that** the temperature-signalling device (80) passes on the temperature signal, processed or unprocessed, to a memory unit (90) and/or a communication unit (95) .

6. Switching station (1) according to Claim 5,
**characterized in that**
the communication unit (95) is configured to pass on the processed or unprocessed temperature signal to one or more centralized or distributed computers.

7. Switching station (1) according to any one of the preceding claims,
**characterized in that**
the switch (5) takes the form of a vacuum switch.

8. Switching station (1) according to any one of the preceding claims,
**characterized in that**
the switch (5) takes the form of a hermetically sealed gasinsulated switch (5) with a gas tank filled with an insulating gas, the temperature-measuring head (40) is located in the gas tank filled with an insulating gas, and the temperature-transmitting element (50) with the temperature-transmitting medium (60) is guided out of the gas tank through a bushing, the temperature-transmitting element (50) with the temperature-transmitting medium (60) being arranged in the bushing in gastight manner.

9. Switching station (1) according to Claim 8,
**characterized in that**
the temperature-transmitting element (50) with the temperature-transmitting medium (60) is arranged in the bushing in such a manner that a transmission of mechanical stresses from the bushing to the temperature-transmitting element (50) with the temperature-transmitting medium (60) is minimized.

10. Switching station (1) according to Claim 9,
**characterized in that**
for the purpose of attachment to the temperature-transmitting element (50) with the temperature-transmitting medium (60), the bushing comprises a metal lip, preferably a curved or corrugated metal lip, which minimizes a transmission of mechanical stresses from the bushing to the temperature-transmitting element (50) with the temperature-transmitting medium (60).

11. Method for operating a switching station according to Claim 6,
**characterized in that**
the one or more centralized or distributed computers analyse the processed or unprocessed temperature signal with respect to a temperature criterion and emit a warning signal to a control room when a fixed or variable threshold value for the temperature criterion is exceeded, and/or initiate a shutdown of the switching station when a further fixed or variable threshold value for the temperature criterion is exceeded.

## Revendications

1. Installation (1) de distribution comprenant un interrupteur (5) pour les moyennes tensions et/ou les hautes tensions, dans lequel l'interrupteur (5) dispose d'une première liaison (10) électrique sur un premier côté (6) de l'interrupteur (5) et d'une deuxième liaison (20) électrique sur un deuxième côté (7) de l'interrupteur (5), dans lequel une moyenne tension ou une haute tension peut être appliquée à l'interrupteur (5) par de la première liaison (10) électrique, et une moyenne tension ou une haute tension peut être appliquée par l'interrupteur (5) par l'intermédiaire de la deuxième liaison (20) électrique, et une unité (30) de mesure de la température, dans lequel l'unité (30) de mesure de la température a une tête (40) de mesure de la température, un élément (50) de transmission de la température, un milieu (60) de transmission de la température, un élément (70) de changement de la température et une signalisation (80) de la température,
dans laquelle
• la tête (40) de mesure de la température est montée sur la première liaison (10) électrique ou sur la deuxième liaison (20) électrique,
**caractérisée en ce que**
• l'élément (50) de transmission de la température se raccorde à la tête (40) de mesure de la température, dans laquelle la tête (40) de mesure de la température est conformée d'une manière conductrice de la chaleur, de manière à prendre une première température de la première liaison (10) électrique ou de la deuxième liaison (20) électrique, ou à tendre vers cette première température et la tête (40) de mesure de la température est conformée de manière à transmettre la première température au milieu (60) de transmission de la température disposé dans l'élément (50) de transmission de la température, de manière à prendre un volume caractéristique de la première température, dans laquelle l'élément (50) de transmission de la température et le milieu (60) de transmission de la température sont réalisés en étant isolés électriquement, et l'élément (50) de transmission de la température et le milieu (60) de transmission de la température ont des coefficients de dilatation thermique différents,
• le volume caractéristique du milieu (60) de transmission de la température agit sur l'élément (70) de changement de la température, de manière à ce que l'élément (70) de modification de la température produise un signal de température, qui est affiché, signalé et/ou mis en mémoire par la signalisation (80) de température.

2. Installation (1) de distribution suivant la revendication 1,
**caractérisée en ce que**
l'élément (50) de transmission de la température a un coefficient de dilatation thermique petit, négligeable par rapport au coefficient de dilatation thermique du milieu (60) de transmission de la température.

3. Installation (1) de distribution suivant la revendication 1 ou 2,
**caractérisée en ce que**
l'élément (70) de changement de la température comporte une capsule de pression et/ou un interrupteur piézoélectrique et/ou un capteur de pression.

4. Installation (1) de distribution suivant l'une des revendications 1 à 3,
**caractérisée en ce que**
la signalisation (80) de température a un affichage de température analogique et/ou un affichage de température numérique.

5. Installation (1) de distribution suivant la revendication 4,
**caractérisée en ce que**
la signalisation (80) de température a un affichage de température numérique, et **en ce que** la signalisation (80) de température achemine le signal de température traité ou non traité à une unité (90) de mémoire et/ou à une unité (95) de communication.

6. Installation (1) de distribution suivant la revendication 5,
**caractérisée en ce que**
l'unité (95) de communication est conformée pour acheminer le signal de température traité ou non traité à un ordinateur ou à plusieurs ordinateurs centraux ou répartis.

7. Installation (1) de distribution suivant l'une des revendications précédentes,
**caractérisée en ce que**
l'interrupteur (5) est constitué sous la forme d'un interrupteur à vide.

8. Installation (1) de distribution suivant l'une des revendications précédentes,
**caractérisée en ce que**
l'interrupteur (5) est constitué sous la forme d'un interrupteur (5) à isolation par du gaz fermé d'une manière hermétique, et ayant un récipient à gaz rempli d'un gaz isolant, la tête (40) de mesure de la température se trouve dans le récipient à gaz rempli d'un gaz isolant et l'élément (50) de transmission de la température avec le milieu (60) de transmission de la température sortent par une traversée du récipient à gaz, dans laquelle l'élément (50) de transmission de la température est, avec le milieu (60) de transmission de la température, disposé d'une manière étanche au gaz dans la traversée.

9. Installation (1) de distribution suivant la revendication 8,
**caractérisée en ce que**
l'élément (50) de transmission de la température est, avec le milieu (60) de transmission de la température, disposé dans la traversée, de manière à rendre minimum une transmission de contraintes mécaniques de la traversée à l'élément (50) de transmission de la température ayant le milieu (60) de transmission de la température.

10. Installation (1) de distribution suivant la revendication 9,
**caractérisée en ce que**
la traversée a, pour le raccordement à l'élément (50) de transmission de la température ayant le milieu (60) de transmission de la température, une lèvre métallique, de préférence une lèvre métallique incurvée ou ondulée, qui rend minimum une transmission de contrainte mécanique de la traversée à l'élément (50) de transmission de la température ayant le milieu (60) de transmission de la température.

11. Procédé pour faire fonctionner une installation de distribution suivant la revendication 6,
**caractérisé en ce que**
le un ou les plusieurs ordinateurs centraux ou répartis analysent le signal de température traité ou non traité, en ce qui concerne un critère de température et, si une valeur de seuil fixe ou variable est dépassée par le critère de température, émettent un signal d'alerte à une salle de contrôle et/ou, si une autre valeur de seuil fixe ou variable est dépassée par le critère de température, font débuter un arrêt de l'installation de distribution.
